# EUROPÄISCHE PATENTANMELDUNG

(11) **EP 0 780 947 A2**
(43) Veröffentlichungstag der Anmeldung: **25.06.1997**
(21) Anmeldenummer: 96119167.3
(22) Anmeldetag: 28.11.1996
(51) Int. Cl.: H02G 15/18, B29C 61/06

(54) **Wärmeschrumpfbare Kabelmuffe mit Temperaturindikator**

(30) Priorität: 18.12.1995 DE 19547286
(71) Anmelder: RXS Kabelgarnituren Gesellschaft mit beschränkter Haftung, D-58093 Hagen (DE)
(72) Erfinder: Meltsch, Hans-Jürgen, Dipl.-Ing., 58239 Schwerte (DE); Rose, Sigrid, Dr.rer nat., 58300 Wetter (DE)
(74) Vertreter: Fuchs, Franz-Josef, Dr.-Ing.

(57) **Zusammenfassung**

Bei der Erfindung handelt es sich um eine wärmeschrumpfbare Kabelmuffe (K) mit Verschlußelementen (VE) und einer übergreifenden Verschlußschiene (KS). Zur Erkennung für ausreichende Wärmezuführung beim Schrumpfvorgang wird ein Temperaturindikator (TIV, TIS, TIP, TIK) auf der Verschlußschiene (KS) und/oder Klammern in den Abzweigbereichen der Kabelmuffe (K) angeordnet.

## Beschreibung

Die Erfindung betrifft eine wärmeschrumpfbare Kabelmuffe mit Verschlußelementen und einer die Verschlußelemente übergreifenden Verschlußschiene und einem Temperaturindikator im Verschlußbereich.

Eine wärmeschrumpfbare Kabelmuffe der genannten Art ist beispielsweise aus der EP 0 238 325 - A2 bekannt. Dort wird als Temperaturindikator im Verschlußbereich eine weiße Markierung sichtbar, wenn eine genügende Wärmeeinwirkung stattgefunden hat. Die Markierung verläuft entlang der Verschlußwülste der Kabelmuffe und wird durch die mechanische Bewegung der Verschlußwülste infolge des Schrumpfvorganges durch die Schlitze der Verschlußschiene hindurch sichtbar. Es wird also angezeigt, daß auf die Verschlußelemente infolge des Schrumpfvorgangs eine gewisse Spannung ausgeübt wird, die darauf schließen läßt, daß der Schrumpfvorgang beendet ist.

Als Temperaturindikatoren zur optischen Temperaturanzeige bei Kabelmuffen werden auch sogenannte Thermoumschlagfarben verwendet, die bei Erreichen der entsprechenden Temperatur ihre Farbe oder ihr Erscheinungsbild ändern. Eine derartige Thermoumschlagfarbe ist aus der US 4.344.909 bekannt, die auf die gesamte Oberfläche der Kabelmuffe aufgetragen wird. Hier werden keine speziellen optischen Temperaturanzeigen in den besonders kritischen Bereichen des Längsverschlusses oder der stirnseitigen Kabeleinführungen vorgesehen, wenn man davon absieht, daß der Ausfluß von Schmelzkleber aus dem Stirnbereich als Hinweis für genügend Wärmeeinwirkung gewertet wird. Geeignete Indikatormaterialien sind beispielsweise aus Römpp-Chemielexikon, Georg Thieme Verlag, Jahrgang 1992 bekannt.

Die Aufgabe der Erfindung liegt darin, daß man in den kritischen Bereichen des Längsverschlusses und der stirnseitigen Kabeleinführungen, besonders bei Kabelabzweigen, eine sichere optische Anzeige für genügende Wärmezuführung erhält, so daß gewährleistet ist, daß die dort eingebrachten Schmelzkleber ausreichend zur Abdichtung aufgeschmolzen worden sind. Die gestellte Aufgabe wird mit einer wärmeschrumpfbaren Kabelmuffe der eingangs erläuterten Art dadurch gelöst, daß der Temperaturindikator auf der Verschlußschiene aufgebracht ist und daß die optische Temperaturanzeige durch den Temperaturindikator der erforderlichen Sollltemperatur im Inneren des Verschlußbereiches angepaßt ist.

Mit der Kabelmuffe gemäß der Erfindung werden die anstehenden Probleme für eine ausreichende Wärmezufuhr während des Schrumpfvorganges in den längsverlaufenden Verschlußbereichen mit allen mechanischen Verschlußelementen oder in den Muffenendbereichen, zum Beispiel bei Abzweigen, vorteilhaft gelöst. Durch die optische Anzeige mit Hilfe des Temperaturindikators wird dann angezeigt, wann die Wärmezufuhr ausreicht um eine vollständige Aufschmelzung des eingebrachten Klebers gewährleisten zu können. Erst nachdem diese Anzeige stattgefunden hat, kann die Wärmezufuhr beendet werden. Diese optische Anzeige erfolgt mit einem Temperaturindikator, der entweder bereits werksseitig oder nach bzw. bei der Montage der Verschlußelemente auf das jeweilige Verschlußelement, zum Beispiel eine Verschlußschiene oder auf eine Klammer im Kabeleinführungsbereich aufgebracht wird. Eine Klammer im stirnseitigen Abzweigbereich kann beispielsweise U- oder E-förmige Struktur aufweisen. Bei ausreichender Erwärmung schlägt dann als Anzeige die Farbe oder das Oberflächenerscheinungsbild des Temperaturindikators um, so daß der Zeitpunkt für die Beendigung der Wärmezufuhr augenfällig wird. Der Temperaturindikator ist dabei jeweils bezüglich der erforderlichen Temperatur und bezüglich der Zeitdauer der Wärmeeinwirkung auf den jeweiligen Einsatzort und/oder die Materialeigenschaften der verwendeten Dichtmittel wie Kleber eingestellt bzw. ausgesucht. Hier spielen die Materialeigenschaften wie zum Beispiel die Viskosität des verwendeten Klebers wie auch dessen Materialgeometrien entsprechend eine Rolle. Im allgemeinen werden für diese Anwendungsfälle Polyamid-Kleber verwendet, die zum Material der Kabelmuffe, meist vorbehandeltes (Corona) Polyethylen, eine gute Haftung ergeben.

Der Temperaturindikator besteht aus z.B. Acryl- oder Akylharz mit temperaturempfindlichen anorganischen Farbpigmenten wie z.B. [Co (nH₃)₆]PO₄.

Dieser Temperaturindikator wird gemäß der Erfindung in bzw. an den kritischen Bereichen angeordnet, so beispielsweise an den Verschlußschienen oder an den Klammern für Abzweige, wie bereits angegeben. Vorzugsweise erfolgt der Auftrag durch Beschichtung mit dem Temperaturindikator auf der Beflammungsseite, wobei der Gegenstand vollständig, in regelmäßigen oder unregelmäßigen Abständen oder nur in den äußerst kritischen Bereichen beschichtet, bedruckt oder bestrichen wird. Derartige Bereiche sind beispielsweise auch bei Durchführungen oder Durchgriffen wie zum Beispiel mit Ösen bei druckdichten Schrumpfmuffen entsprechend zu behandeln.

Ein derartiger Temperaturindikator auf der Verschlußschiene, der kritischen Stelle bezüglich der Wärmezufuhr auf die gesamte Muffe kann beispielsweise auch die bisher übliche Thermoumschlagfarbe auf der gesamten Oberfläche der Kabelmuffe ersetzen, wobei die Markierung auf die Verschlußschiene entweder vollständig, in Streifen, in einzelnen Punkten oder in ähnlichen Formationen aufgebracht werden kann. Hierdurch wird sichergestellt, daß auf der Oberfläche der Kabelmuffe keine Fremdmaterialien aufgebracht sind. Außerdem ergibt sich insgesamt ein besseres Erscheinungsbild als bei Verwendung der bisherigen Thermoumschlagfarbe. Schädigungen des schrumpffähigen Materials können bei einem Temperaturindikator auf der Verschlußschiene ebenfalls nicht auftreten.

Es wäre auch möglich im Manschettenendbereich (im Bereich der Kabeldichtung) einige Punkte, Striche usw. eines Temperaturindikators aufzubringen. Dies wäre eine optische Anzeige im kritischen Bereich der Kabeldichtung, ohne daß eine Umschlagfarbe auf dem bezüglich der Wärmeenergie un- kritischen Mittelbereich der Kabelmuffe aufgebracht werden muß.

Der Temperaturindikator selbst kann in Form von Meßstreifen, von Lacken, von Kreiden, von Flüssigkeiten oder von Signier- oder Wachsstiften verwendet werden. Bei all diesen Ausführungsformen tritt die Änderung des Erscheinungsbildes bei einer bestimmten Temperatur auf, die entsprechend der verwendeten Materialien vorgegeben sind. Der Aufbau eines solchen Temperaturindikators besteht beispielsweise aus anorganischen Pigmenten oder Pigmentsystemen, so enthält er zum Beispiel Kupfer, Kobalt, Nickel, Chrom, Vanadium, Molybdän oder Uransalze. In gleicher Weise können jedoch organische Systeme, z.B. weißes Polyamid, das bei Erreichen des Schmelzpunktes einen transparenten Film bildet, für die Erkennung einer bestimmten Temperatur herangezogen werden. Selbstverständlich ist auch eine Mischung aus anorganischen und organischen Erkennungssystemen möglich. Für die Erkennung mehrerer kritischer Temperaturen können selbstverständlich auch Temperaturindikatoren mit verschiedenen Temperaturansprechwerten eingesetzt werden, so daß auf diese Weise verschiedene Temperaturstufen erkannt werden können.

Die Änderung der Farbe oder auch des Oberflächenerscheinungsbildes des Temperaturindikators kann beispielsweise eine reversible Reaktion sein, so daß der Umschlag zunächst bei Überschreitung einer bestimmten Temperatur sichtbar wird und bei Abkühlung wieder in den ursprünglichen Zustand zurückkehrt. Im allgemeinen werden jedoch Temperaturindikatoren mit irreversiblen Erscheinungsbildern bzw. Farbumschlägen verwendet wie sie aus dem bereits genannten Römpp-Chemielexikon allgemein bekannt sind.

Es können auch mehrere Temperaturindikatoren eingesetzt werden, die verschiedene Ansprechschwellen aufweisen, so daß mehrere kritische Temperaturwerte getrennt voneinander erkannt werden können. Beispielsweise kann ein Temperaturindikator mit einem Ansprechwert für genügend aufgebrachte Wärmezufuhr und ein anderer Temperaturindikator mit einer Schwelle, die eine kritische Temperatur anzeigt, in einer Kombination verwendet werden. Der Temperaturindikator für die Verschlußschiene kann und muß erst bei höheren Temperaturwerten ansprechen, da der Kleber im innen liegenden Verschlußbereich länger braucht um aufzuschmelzen, während im Kabeleinführungsbereich ein niedrigerer Grenzwert angezeigt werden muß, um die eingeführten Kabel nicht zu gefährden. Hierfür eignen sich z.B. Acryl- oder Alkydharze mit temperaturempfindlichen anorganischen Farbpigmenten wie z.B. (NH₄)₂ U₂0₇ und (NH₄)₃ PO₄·12MoO₃.

Die Erfindung wird nun anhand von fünf Figuren näher erläutert.
- Figur 1: zeigt eine Verschlußschiene mit vollständig bedeckendem Temperaturindikator.
- Figur 2: zeigt die Anordnung des Verschlußbereiches in einer Stirnansicht.
- Figur 3: zeigt eine Verschlußschiene mit einem Temperaturindikator entlang der Schenkel.
- Figur 4: zeigt eine Verschlußschiene mit partieller Beschichtung von Temperaturindikatoren.
- Figur 5: zeigt eine Abzweigklammer mit einer Beschichtung aus einem Temperaturindikator.

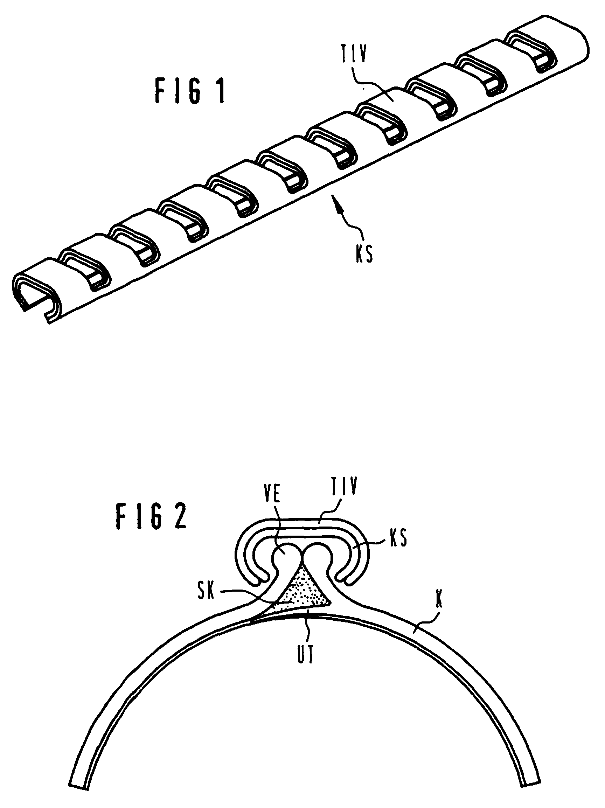

Die Figur 1 vermittelt die Ausführung einer Verschlußschiene oder Klemmschiene KS für eine schrumpfbare Kabelmuffe, die über die längsverlaufenden Kanten der Kabelmuffe klemmend aufgeschoben wird. Im Verschlußbereich der Kabelmuffe wird Schmelzkleber zur Abdichtung eingebracht, der bei Wärmezufuhr aufschmilzt und den Längsschlitz dichtend abschließt. Die Klemmschiene KS ist nun mit einem Temperaturindikator TIV vollflächig beschichtet, der bei einem Temperaturwert seine Farbe bzw. seine Oberflächenstruktur ändert, wenn gesichert ist, daß zum Inneren des Verschlußbereiches zur Aufschmelzung des Schmelzklebers genügend Wärmezufuhr stattgefunden hat. Dieser Umschlagwert liegt bei etwa 150° bis 400° C, vorzugsweise ca. 160 bis 350° C. Wenn dieser Farbumschlag bzw. diese Konfigurationsänderung stattgefunden hat, kann die Wärmezufuhr beendet werden, da sichergestellt ist, daß der im Verschlußbereich befindliche Schmelzkleber so aufgeschmolzen ist, daß eine vollständige und sichere Dichtung erreicht ist.

Die Figur 2 vermittelt die Anordnung des Verschlußbereiches, wobei daraus hervorgeht, daß zwischen den Verschlußelementen VE der Kabelmuffe K ein Schmelzkleber SK eingebracht oder als Beschichtung der Kabelmuffe enthalten ist, der durch Wärmezufuhr aufgeschmolzen werden muß. Für die Beendigung dieser Wärmezufuhr wird als optische Anzeige der Umschlagspunkt des Temperaturindikators TIV gewertet, der auf der Klemmschiene KS auf der Außenseite angeordnet ist. Diese Anordnung ist in Figur 2 sehr schematisch angezeigt, um die Verhältnisse deutlich zeigen zu können. In Wirklichkeit umgreift die Verschlußschiene die Verschlußelemente sehr streng und preßt sie gegeneinander.

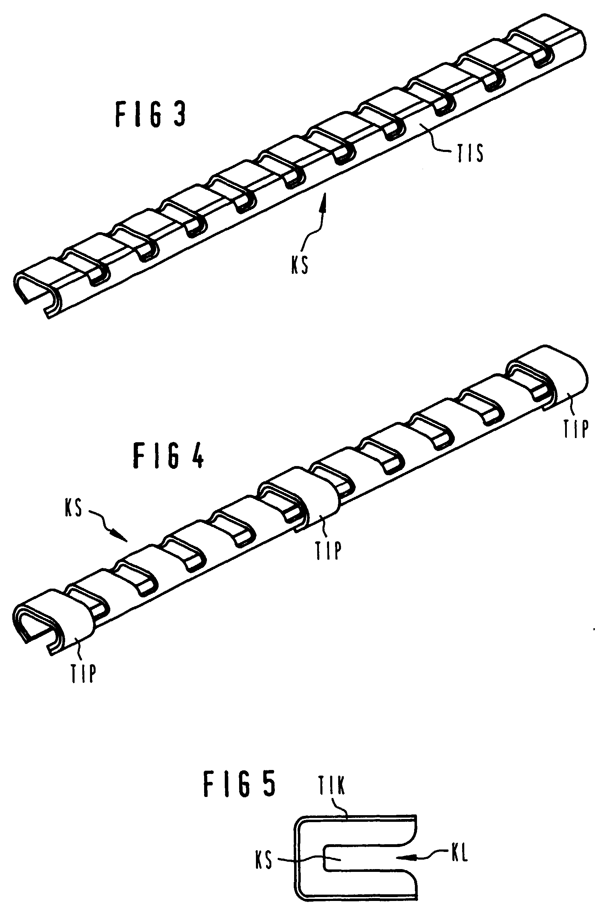

In Figur 3 wird dargestellt, daß der Temperaturindikator TIS auch nur seitlich auf den Schenkeln der Klemmschiene KS angeordnet werden kann, da diese Bereiche dem kritischen Aufschmelzbereich noch näher zugeordnet sind.

Figur 4 vermittelt, daß Temperaturindikatoren TIP auch nur teilweise bzw. partiell am kritischen Bereich angeordnet werden müssen, wie zum Beispiel in den Endbereichen und in der Mitte der Kabelmuffe.

Figur 5 zeigt schließlich eine Klammer KL, die im Stirnbereich der Kabelmuffe bei Kabelabzweigen zwischen den abzweigenden Kabeln aufgeschoben wird, um auch in diesem Zwickelbereich eine Abdichtung zu erreichen. In diesem kritischen Bereich ist für die Abdichtung Schmelzkleber vorgesehen, der zum Beispiel als Füllstück in den Zwickelraum eingesetzt wird. Die Wandungen der Kabelmuffe werden mit Hilfe der Klammer KL auf dieses Füllstück gedrückt und mit Hilfe der Beschichtung aus einem Temperaturindikator TIK wird festgestellt, wann die Solltemperatur für die Aufschmelzung des Füllstückes erreicht ist. Hier ist eine U-förmige (KL) dargestellt, in dessen Schlitz KS die gegenüberliegenden Wandungen der Kabelmuffe und Schmelzkleber eingeführt werden. Eine Beschichtung mit einem Temperaturindikator kann jedoch auch bei anderen, zum Beispiel E-förmigen Klammern für die optische Anzeige aufgebracht werden, deren Mittelsteg Kleber aufweist.

## Patentansprüche

1. Wärmeschrumpfbare Kabelmuffe mit Verschlußelementen und einer die Verschlußelemente übergreifenden Verschlußschiene und einem Temperaturindikator im Verschlußbereich,
**dadurch gekennzeichnet,**
daß der Temperaturindikator (TIV, TIS, TIP) auf der Verschlußschiene (KS) aufgebracht ist und daß die optische Temperaturanzeige durch den Temperaturindikator (TIV, TIS, TIP) der erforderlichen Solltemperatur im Inneren des Verschlußbereiches angepaßt ist.

2. Wärmeschrumpfbare Kabelmuffe nach Anspruch 1,
**dadurch gekennzeichnet,**
daß ein Temperaturindikator (TIK) zusätzlich auf Klammern (KL) bei stirnseitigen Kabelabzweigbereichen und/oder bei Durchführungen angeordnet ist.

3. Wärmeschrumpfbare Kabelmuffe nach einem der vorhergehenden Ansprüche,
**dadurch gekennzeichnet,**
daß der Temperaturindikator (TIV, TIS, TIP, TIK) auf der Beflammungsseite angeordnet ist.

4. Wärmeschrumpfbare Kabelmuffe nach einem der vorhergehenden Ansprüche,
**dadurch gekennzeichnet,**
daß der Temperaturindikator (TIV) auf der gesamten Fläche der Klemmschiene (KL) und/oder Klammern (KL) angeordnet ist.

5. Wärmeschrumpfbare Kabelmuffe nach einem der Ansprüche 1 bis 3,
**dadurch gekennzeichnet,**
daß der Temperaturindikator (TIP, TIS, TIK) teilflächig auf der Klemmschiene (KS) und/oder den Klammern (KL) angeordnet ist.

6. Wärmeschrumpfbare Kabelmuffe nach Anspruch 5,
**dadurch gekennzeichnet,**
daß der Temperaturindikator (TIP) in regelmäßigen Abständen angeordnet ist.

7. Wärmeschrumpfbare Kabelmuffe nach Anspruch 5,
**dadurch gekennzeichnet,**
daß der Temperaturindikator (TIP) in unregelmäßigen Abständen angeordnet ist.

8. Wärmeschrumpfbare Kabelmuffe nach Anspruch 5,
**dadurch gekennzeichnet,**
daß der Temperaturindikator (TIP) in den Randbereichen, vorzugsweise nahe der Kabeleinführungsbereiche, angeordnet ist.

9. Wärmeschrumpfbare Kabelmuffe nach einem der vorhergehenden Ansprüche,
**dadurch gekennzeichnet,**
daß der Temperaturindikator zusätzlich auf der Oberfläche der Kabelmuffe (K) angeordnet ist.

10. Wärmeschrumpfbare Kabelmuffe nach Anspruch 9,
**dadurch gekennzeichnet,**
daß der Temperaturindikator in Form von Streifen angeordnet ist.

11. Wärmeschrumpfbare Kabelmuffe nach Anspruch 9,
**dadurch gekennzeichnet,**
daß der Temperaturindikator in Form von Punkten angeordnet ist.

12. Wärmeschrumpfbare Kabelmuffe nach Anspruch 9,
**dadurch gekennzeichnet,**
daß der Temperaturindikator in Form einzelner Markierungsbereiche angeordnet ist.

13. Wärmeschrumpfbare Kabelmuffe nach Anspruch 9,
**dadurch gekennzeichnet,**
daß der Temperaturindikator im Kabeleinführungsbereich angeordnet ist.

14. Wärmeschrumpfbare Kabelmuffe nach Anspruch 9,
**dadurch gekennzeichnet,**
daß der Temperaturindikator im Überlappungsbereich eines Untertrittes (UT) im Verschlußbereich in der Kabelmuffe (K) angeordnet ist.

15. Wärmeschrumpfbare Kabelmuffe nach Anspruch 9,
**dadurch gekennzeichnet,**
daß der Temperaturindikator (TIP) seitlich entlang der Klemmschiene (KS) auf deren Schenkel angeordnet ist.

16. Wärmeschrumpfbare Kabelmuffe nach einem der vorhergehenden Ansprüche,
**dadurch gekennzeichnet,**
daß der Temperaturindikator aus einem Lack, vorzugsweise aus Acryl- oder Alkydharz mit temperaturempfindlichen anorganischen Farbpigmenten, besteht.

17. Wärmeschrumpfbare Kabelmuffe nach einem der Ansprüche 1 bis 15,
**dadurch gekennzeichnet,**
daß der Temperaturindikator aus Kreide, vorzugsweise aus Wachsen mit temperaturempfindlichen anorganischen Farbpigmenten, besteht.

18. Wärmeschrumpfbare Kabelmuffe nach einem der Ansprüche 1 bis 15,
**dadurch gekennzeichnet,**
daß der Temperaturindikator aus einer Flüssigkeit, vorzugsweise aus Acryl- oder Alkydharz mit temperaturempfindlichen anorganischen Farbpigmenten in organischen Lösungsmitteln, besteht.

19. Wärmeschrumpfbare Kabelmuffe nach einem der Ansprüche 1 bis 15,
**dadurch gekennzeichnet,**
daß der Temperaturindikator mittels eines Signierstiftes aufgebracht ist.

20. Wärmeschrumpfbare Kabelmuffe nach einem der vorhergehenden Ansprüche,
**dadurch gekennzeichnet,**
daß der Temperaturindikator anorganische Pigmente oder Pigmentsysteme, vorzugsweise Kupfer, Kobalt, Nickel, Chrom, Vanadium, Molybdän oder Uransalze, enthält.

21. Wärmeschrumpfbare Kabelmuffe nach einem der Ansprüche 1 bis 19,
**dadurch gekennzeichnet,**
daß der Temperaturindikator organische Systeme enthält, wie vorzugsweise weißes Polyamidpulver.

22. Wärmeschrumpfbare Kabelmuffe nach einem der Ansprüche 1 bis 19,
**dadurch gekennzeichnet,**
daß der Temperaturindikator Mischsysteme aus anorganischen und organischen Systemen enthält.

23. Wärmeschrumpfbare Kabelmuffe nach einem der vorhergehenden Ansprüche,
**dadurch gekennzeichnet,**
daß die Temperaturanzeige des Temperaturindikators reversibel ist.

24. Wärmeschrumpfbare Kabelmuffe nach einem der Ansprüche 1 bis 22,
**dadurch gekennzeichnet,**
daß die Temperaturanzeige des Temperaturindikators irreversibel ist.

25. Wärmeschrumpfbare Kabelmuffe nach einem der vorhergehenden Ansprüche,
**dadurch gekennzeichnet,**
daß die Temperaturanzeige des Temperaturindikators in einem Temperaturbereich von 150°C bis 400°C, vorzugsweise von 160°C bis 350°C, erfolgt.

26. Wärmeschrumpfbare Kabelmuffe nach einem der vorhergehenden Ansprüche,
**dadurch gekennzeichnet,**
daß mehrere Temperaturindikatoren mit verschiedenen Umschlagtemperaturen angeordnet sind.

27. Wärmeschrumpfbare Kabelmuffe nach einem der vorhergehenden Ansprüche,
**dadurch gekennzeichnet,**
daß der Temperaturindikator (TIV, TIS, TIP) ausreichende Wärmezufuhr für die gesamte Kabelmuffe signalisiert.
